Europäisches Patentamt

(19) European Patent Office (11) Publication number: **0 017 283**

Office européen des brevets **B1**

(12) **EUROPEAN PATENT SPECIFICATION**

(45) Date of publication of patent specification: **18.04.84** (51) Int. Cl.³: **B 01 D 17/04, B 01 D 13/00**

(21) Application number: **80200261.8**

(22) Date of filing: **21.03.80**

(54) Process and plant for breaking of water-oil emulsions.

(30) Priority: **03.04.79 GB 7911679**

(43) Date of publication of application:
**15.10.80 Bulletin 80/21**

(45) Publication of the grant of the patent:
**18.04.84 Bulletin 84/16**

(84) Designated Contracting States:
**BE DE FR GB IT NL**

(56) References cited:
DE - A - 2 750 838
FR - A - 1 297 403
FR - A - 2 249 698
FR - A - 2 319 400
FR - A - 2 345 187
US - A - 2 522 378
US - A - 2 588 794
US - A - 3 142 612
US - A - 3 262 578
US - A - 4 035 302
US - A - 4 057 493

(73) Proprietor: SHELL INTERNATIONALE RESEARCH
MAATSCHAPPIJ B.V.
Carel van Bylandtlaan 30
NL-2596 HR Den Haag (NL)

(72) Inventor: Bitter, Johan George Albert
Badhuisweg 3
NL-1031 CM Amsterdam (NL)
Inventor: Reynhout, Marinus Johannes
Badhuisweg 3
NL-1031 CM Amsterdam (NL)

(74) Representative: Puister, Antonius Tonnis, Mr. et al,
P.O. Box 302
NL-2501 CH The Hague (NL)

(56) References cited:
CHEM. ING. TECHN., vol. 50, no. 10 (1978.10),
WEINHEIM (DE) W. HALWACHS:
"Flüssigmembran-Technik- ein
zukunftweisender Extraktionsprozess", pages
767-774

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Process and plant for breaking of water-oil emulsions

The invention relates to a process and plant for breaking a stable water-oil emulsion, in which process the emulsion is driven through a micro-pore membrane having an array of hydrophilic zones interspersed amongst an array of oleophilic zones.

The expression "water-oil elulsion" refers to water-in-oil and oil-in-water emulsions. The word "hydrophilic" means readily wetted by water, showing therefore a strong affinity for water. The word "oleophilic" means readily wetted by oil, showing therefore a strong affinity for oil.

In many cases the aqueous phase may be a solution of an acid, a base, a salt or an organic compound.

Water-oil emulsions are found widely in industry, and whether they are formed intentionally, or arise incidentally as a result of a particular operation, the aqueous phase has to be separated from the oil phase sooner or later; in other words the emulsion has to be "broken". Commonly this is done either by allowing the two phases to separate out by themselves due to their differing densities, or in cases where the emulsions are relatively stable, the operation may be aided by the addition of chemicals, or carried out electrolytically or electrostatically.

However, in the case of chemical separation, the chemicals used act by changing the properties of the oil or additives which are used in making up the emulsion. Such chemicals may often be costly, and addition they may have harmful effects on the oil and thus complicate or prevent its reclamation.

Electrolytic and electrostatic separation processes are generally expensive to operate due to the amount of energy required.

When a water-oil emulsion comes into contact with an impervious material surface which is wettable by the liquid of the droplets, each droplet tends to spread on that surface as a film so that coalescence of adjacent droplets will occur. However as described in U.S. patent specification 4,057,493 there have sometimes been experienced difficulties in obtaining a control surface which is desirably compatible with a component fluid being processed. According to this patent specification, coalescence of the droplets comprising a dispersed phase is enhanced at the junction between impervious surfaces of a high surface energy level material and a low surface energy level material, of which one surface is wettable and the other surface is non-wettable by the dispersed phase. A droplet coalescence control element presenting an array of exposed junctions between surfaces of different surface energy level materials is used. This known process has two marked advantages. First, the droplet coalescence effect occurs whether water or kerosene is the dispersed phase. Second, the maximum capacity, indicated by the flooding velocity, is considerably increased.

The applicants have experienced that breaking of stable emulsions in which the emulsified droplets have a small diameter and in which the emulsified phase is present in a high content, is in particular difficult. In some cases the micro-pore membrane became blocked by a viscous mass so that the process had to be discontinued. In other cases a considerable part of the emulsion was not broken and both the broken and the unbroken emulsion passed the membrane. It was also experienced that the emulsion passed the membrane without being broken at all.

It has now been found that stable emulsions in which the emulsified droplets have a small diameter within a specific range and in which the emulsified phase is present in a high content, are completely separated when membranes having pore diameters within a specific range are used and the ratio of the diameter of the emulsified droplets and the size of the pores complies with a certain requirement.

Accordingly, the invention provides a process for breaking a stable water-oil emulsion, in which process the emulsion is driven through a micro-pore membrane having an array of hydrophilic zones interspersed amongst an array of oleophilic zones, characterized in that, in order to obtain a complete separation between water and oil, a stable water-oil emulsion in which the emulsified droplets have a diameter in the range of from 0.4 to 7 $\mu$m is driven through the micro-pore membrane, the pores of which having a size in the range of from 0.2 to 10 $\mu$m and the ratio of the diameter of the emulsified droplets and the size of the pores of the micro-pore membrane being in the range of from 0.5 to 10.

The two phases will the rapidly and completely settle apart and can be decanted separately. It has been found that if the ratio of the diameter of the emulsified droplets and the size of the pores is lower than 0.5 only part of the emulsion is broken. The actual choice of the pore size will naturally depend upon the type of emulsion to be broken.

The process in accordance with the invention can operate effectively at ambient temperatures. In cases the membranes to be used can withstand higher temperatures there is no reason why the process should not be carried out at higher temperatures. Typical yields may be in the order of 10,000 kg/m²/day at pressures as low as 2.5 bar across the membrane, although this will to some extent depend, for example upon the viscosity of the oil used in the emulsion, and the structure of the membrane.

The membrane itself may be woven or nonwoven, and made of natural, synthetic or artificial fibres. Where a membrane is not inherently oleophilic or hydrophilic, it may need to be pretreated to create the desired arrays of oleophilic and hydrophilic zones.

In many instances the fibres themselves may be inherently either oleophilic or hydrophilic. The membrane may then be given the desired array of contrasting hydrophilic or oleophilic zones as required by using say from 1 to 20% of an appropriate binder material and preferably from 2 to 10%.

It may also be possible to prewash the membrane to give it the desired hydrophilic or oleophilic properties. This may conveniently be carried out by washing the membrane itself in a weak oil-in-water emulsion (a weak emulsion which easily breaks), or by subjecting it to a spray of atomized oil and one of water so that there is a finely even distribution of the two zones, interspersed one amongst the other. Alternatively the two zones may be arranged in a regular or orderly manner either as a result of the manufacture of the membrane, of the material used in it or by a particular treatment, such as by wetting alternative strips of the membrane with water and/or oil.

The invention finds an important application in the breaking of cutting oil emulsions such as are used for machining of metals. In use, these emulsions have to be stable, even in contact with metal and tools at high temperatures, but after a time the qualities of the oil deteriorate, and the emulsion has to be broken before the oil can be treated. Such emulsions are commonly oil-in-water emulsions, and can be broken very efficiently using a process according to the invention.

The process according to the invention is particularly useful for the recovery of the oil phase and the extracted phase where liquid membranes are used for concentrating weak solutions or for extraction. Invented in 1966 by "Li", these liquid membranes are also called "Li" membranes. The comprise a very stable water-in-oil type emulsion in which the water phase contains a chemical reagent and the oil phase an oil-soluble detergent, and in some cases a complexing agent. Such an emulsion once made up is contacted with an aqueous solution containing the substance to be concentrated. This substance reacts, normally by ion exchange, with the chemical reagent in the water phase encapsulated in the oil. The purpose of a complexing agent is to enhance this ion exchange.

Whilst the usefulness of Li membranes has been widely appreciated, up to now full advantage has not been taken of them because of the difficulty of breaking the very stable emulsion which holds the extracted substance captive in the oil droplets. Most usually such very stable emulsions can only be broken chemically, but this damages the emulsifying agent and probably also the complexing agent requiring make-up quantities of both. The emulsion breaking agent may also be difficult to remove from the extracted product and/or the oil.

By applying the invention to the breaking of Li membranes both phases can be effectively and efficiently separated without damaging either the oil, the emulsifying agent, the complexing agent or the extracted substance.

One potentially important area for the use of Li membranes coupled with the process in accordance with the invention is the concentration of phenol and other organic chemicals in waste water. The chemical reagent in this case may conveniently be sodium hydroxide.

Another potentially very interesting application of Li membranes is for the recovery of a metal salt from an aqueous solution of a metal salt. One notable example of this is the copper sulphate solution encountered in electrolytic plants for copper production. In this application the aqueous solution is conveniently concentrated by taking sulphuric acid as the chemical reagent in the aqueous droplets within the Li membrane.

The invention also relates to a plant for carrying out a process in accordance with the invention, which comprises a vessel which is arranged to present a micro-pore membrane to the flow of a water-oil emulsion, which membrane has an array of hydrophilic zones interspersed amongst an array of oleophilic zones and a vessel in which the resulting two separated phases can settle apart, characterized in that the pores of the micro-pore membrane have a size in the range of from 0.2 to 10 $\mu$m.

The membrane may either be disposed in a so-called full-flow configuration where all the flow passes through the membrane or a part flow configuration where the emulsion flows over the membrane and only a part of it passes through it on each pass.

A particularly attractive feature of the invention is that not only is such plant very simple, and requires only summary maintenance, but it lends itself to eonomic units of almost any size, large or small. Not only is it thus suited to large industrial application, but also to being sold in small units which can be used in workshops, laboratories and the like.

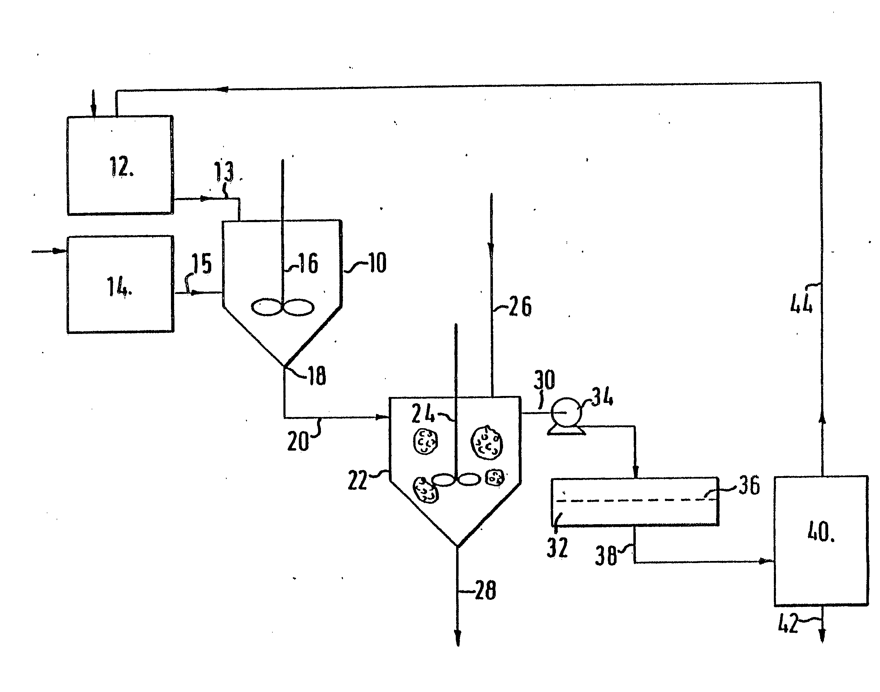

The invention will now be further illustrated by way of example with reference to the accompanying drawing which is a schematic block diagram of a plant for carrying out a process in accordance with the invention.

The plant shown is intended for making and breaking a Li membrane. Basically it comprises an emulgator 10 connected with a reservoir 12 by line 13 for a mineral oil which acts as a continuous phase and a reservoir 14 by line 15 for a chemical reagent. The emulgator 10, in which the Li membrane is prepared, is provided with a powered stirrer 16 and its outlet 18 is connected by a line 20 to an extraction vessel 22, which is also provided with a powered stirrer 24.

The extraction vessel 22 is provided with a line 26 for receiving a solution of the substance to be extracted and an exit line 28 for the treated solution. The extraction vessel is provided with another outlet line 30 for the Li membrane, the aqueous phase of which contains the extracted substance. Alternatively, both phases may leave the extraction vessel 22 to be separated out in a coalescer (not shown). The line 30 leads to an emulsion breaking vessel 32 for breaking the Li membrane via a pump 34. The vessel 32 houses a micro-pore membrane 36 according to the invention (shown in diagrammatic form) in a full-flow configuration. The membrane, which may need to have a substantial surface area is often in the form of a filter pack wherein a very large number of elements are provided in parallel in order to reduce its size to a minimum.

The treated phases leave the emulsion breaking vessel 32 by line 38 and pass to a coalescer 40, from which the separated phases can be drawn off by lines 42 and 44. The extracted phase is in general the more dense of the two and leaves by the lower line 42 whilst the oil phase with the emulsifying agent and the complexing agent (if present) leaves the upper line 44 leading back to the reservoir 12 whence it can be reused without further treatment.

The invention is further illustrated by means of the following Examples. The examples are and the comparative experiments are not according to the invention.

Comparative Experiment I

500 ml kerosine, 25 g of the complexing agent SME 529 (2-hydroxy-5-nonylacetofenonoxim) and 1 ml of a detergent comprising a reaction product of polyisobutenylmaleic anhydride and tetraethylenepentamine were added to 500 ml $H_2SO_4$ (200 g/l) and agitated for 1 minute at 20,000 revolutions per minute (rpm).

25 ml of the resulting emulsion were added to 250 ml of a copper sulphate solution (2,000 ppm $Cu^{II}$) in a reactor vessel and stirred for 20 minutes at 350 rpm. During the stirring emulsified droplets of from 2 mm to 5 mm were formed. These droplets are Li membranes and contain an aqueous phase emulsified therein. The two phases were allowed to settle and on removing the copper sulphate solution its copper content had been halved.

The emulsified droplets (which will be referred to as Emulsion A; and which droplets contain the aqueous phase emulsified therein droplets of 1 $\mu$m diameter) were then brought into contact with a 50 cm$^2$ polytetrafluoroethylene (PTFE) membrane (1 $\mu$m pore size) which had been prewashed with isooctane. At a pressure of 4 bar and at a temperature of 28°C, only the oil phase passed the membrane at a rate of 140 kg/m$^2$/day. Within a short time the membrane became blocked by a viscous mass and the test had to be discontinued.

Comparative Experiment II

Emulsion A was brought into contact with a 50 cm$^2$ polysulphone ultra-filtration membrane with a pore size of 0.003 $\mu$m (type GR8 from the company DDS-Danske Sukker Fabrikker). This membrane had been prewashed in demineralised water, ethanol and isooctane. Using a pressure of 6 bar and a temperature of from 22 to 34°C only the oil phase passed. The flux was 3 kg/m$^2$/day and the test had to be discontinued for the same reasons as did comparative experiment I.

Example 1

Emulsion A was brought into contact with a 50 cm$^2$ membrane comprising ultra-fine glass fibres bound with 5% acrylic binder, as manufactured by Gelman & Co. and having a mean pore size of approx. 0.7 $\mu$m. At a temperature of 21°C and a pressure of 0.7 bar the emulsion was completely broken and both phases passed the membrane. The flux was in the order of 10,000 kg/m$^2$/day.

Comparative Experiment III

Emulsion A was brought into contact with a 50 cm$^2$ glass fibre membrane without binder from Macheny & Nagel, which had a pore size of about 0.3 $\mu$m. At a temperature of 24°C and a pressure of 0.7 bar approximately half of the emulsion was broken. Both the broken and the unbroken emulsion passed the membrane, and the flux was in the order of 20,000 kg/m$^2$/day.

Example 2

The glass fibre membrane described in comparative experiment III was locally treated with drops of a 5% solution of polymethylmethacrylate in dichloromethane, and the latter was subsequently evaporated. An emulsion prepared from 32 parts by weight (pbw) of water, 66 pbw of isooctane and 2 pbw of a commercial surfactant (Decon 90), having emulsified droplets with a diameter of 2 $\mu$m, was forwarded through the membrane thus obtained at 1.5 bar at 20°C. The emulsion was completely broken, the throughput was 37,000 kg/m$^2$/day.

Comparative Experiment IV

500 ml of isooctane and 5 ml of the detergent described in comparative experiment I were added to 500 ml of a 2.5N caustic soda solution and agitated for 1 min. at 10,000 rpm. The resulting emulsion (283 g) was added to 1500 ml of demineralised water having a phenol content of 390 parts per million (ppm). This mixture was stirred at 150 rpm for 60 min. during which time emulsion droplets of a diameter of 1 to 5 mm were formed. These droplets are Li membranes and contain an aqueous phase emulsified therein. The water phase was drained off and upon analysis was found to contain 1 ppm phenol at a pH of 10.0. Leakage of caustic soda from the oil droplets over the 60 min. was approximately 0.03%.

The remaining emulsion (hereinafter referred to as Emulsion B, which contains the aqueous phase emulsified in droplets of 0.4 $\mu$m diameter) was decanted into a filter vessel and driven through a membrane from Schleicher & Schull which had a surface area of 50 cm$^2$ and consisted of a 3-layer glass fibre mat with an inorganic binder (no oleophilic sites were present). The pore size of the membrane was according to the manufacturer ca. 0.3 $\mu$m, which means that solid particles with a size above about 0.3 $\mu$m did not pass the three-layer filter. The size of the pores in each layer is much higher and above 1 $\mu$m. At a temperature of between 23 and 55°C and a pressure of 2.5 bar about 2/3 of the emulsion was broken; both broken and unbroken emulsion passed this membrane and the total flux varied between 2,000 and 20,000 kg/m$^2$/day, depending upon the temperature.

Comparative Experiment V

Emulsion B was brought into contact with a membrane similar to that used in comparative experiment IV but with the sole difference that an organic binder was used to bind the fibres. The ratio of diameter of emulsified droplets and membrane pore size was below 0.5.

At a temperature of 54°C and a pressure of 2.5 bar, the emulsion passed the membrane at a rate of 100,000 kg/m$^2$/day without being broken.

Comparative Experiment VI

Emulsion B was brought into contact with a membrane from Schleicher & Schull comprising 3 layers of glass fibres impregnated with silicones. Its pore size was smaller than 0.3 $\mu$m for solid particles; the size of the pores in each layer is much higher and above 1 $\mu$m. At a temperature of 56°C and a pressure of 2.5 bar all the emulsion passed the membrane, but only about 1/3 was broken. The flow was in the order of 24,000 kg/m$^2$/day.

Example 3

Emulsion B was brought into contact with a membrane comprising 3 layers of ultra-fine glass fibres with 5% acrylic binder from Gelman & Co. The membrane had a rejection rate of 98% for particles of 0.7 $\mu$m; the pore size in each layer was also 0.7 $\mu$m. At a temperature between 30 and 60°C the emulsion was completely broken with both the oil phase and the water phase passing the membrane. A flow of between 4,000 and 20,000 kg/m$^2$/day was observed.

Comparative Experiment VII

Emulsion B was introduced into a cylindrical organic resin bonded glass fiber filter from Balston. This filter had been specially developed to break oil-in-water emulsions up to a maximum of 1000 ppm oil and had a pore size of 10 $\mu$m. At a temperature of 20°C and a pressure of 0.15 bar about half of the emulsion was broken and a flow of between 500 and 1900 kg/m$^2$/day was achieved.

Example 4

An emulsion similar to emulsion B was prepared, with the difference that the agitation was carried out for 1 min. at 750 rpm. The emulsified aqueous droplets in the Li membrane had a diameter of 7 $\mu$m. This emulsion was driven through the Balston filter described in comparative experiment VII at 1.5 bar. The emulsion was broken completely and a flow of 5,000 kg/m$^2$/day was observed.

Comparative Experiment VIII

Emulsion C comprised an aqueous emulsion of Shell Dromus B cutting oil with a small quantity of potassium hydroxide. The emulsion, which contained emulsified oil droplets of 1 $\mu$m diameter was brought into contact with a cellulose acetate micropore membrane from Millipore, which had been prewashed in water or in a diluted solution of $MgCl_2$. The pores of the filter were ca. 0.45 $\mu$m. At a pressure differential of about 1 bar at a temperature of 20°C only the water phase passed. A flux of 50 to 700 kg/m$^2$/day was obtained but the membrane became obstructed by the formation of an oil layer in it.

Comparative Experiment IX

Emulsion C was brought into contact again with the membrane used in comparative experiment VIII, but on this occasion the membrane had been prewashed in oil. At a temperature of 20°C and a pressure differential of 1 bar the emulsion passed the membrane virtually unbroken. The flux was in the order of 700 kg/m$^2$/day.

Example 5

Emulsion C was brought into contact again with the membrane used in comparative experiment VIII, but on this occasion the membrane had been treated by passing a weak oil-in-water emulsion through it. At a temperature of 20°C and a pressure differential of 1 bar the emulsion passed through the membrane and was completely broken. A flux of between 70 and 600 kg/m$^2$/day was observed.

Example 6

A membrane with interspersed hydrophilic and oleophilic zones was prepared by sintering polypropylene fibres together with the aid of an inorganic water-soluble salt. The pore size amounted to 1—3 $\mu$m. The emulsion described in example 2 was forwarded through the membrane at 20°C and 1.5 bar. The emulsion was broken completely, the throughput amounted to 400,000 kg/m$^2$/day.

Example 7

About half of the surface of a polytetrafluoroethylene membrane (pore size 0.2 $\mu$m) was sprayed with a 1:1 solution of 2-propanol and water. The emulsion described in example 2 was forwarded through the membrane thus obtained at 2 bar and 20°C. The emulsion was completely broken; the throughput was 90,000 kg/m²/day.

Comparative Experiment X
In this experiment the polytetrafluoroethylene of Example 7 was used in untreated form with the same emulsion and under the same conditions as in Example 7. In the beginning the throughput was 18,000 kg/m²/day, but the throughput rapidly declined and the filter was blocked completely.

**Claims**

1. A process for breaking a stable water-oil emulsion, in which process the emulsion is driven through a micro-pore membrane having an array of hydrophilic zones interspersed amongst an array of oleophilic zones, characterized in that, in order to obtain a complete separation between water and oil, a stable water-oil emulsion in which the emulsified droplets have a diameter in the range of from 0.4 to 7 $\mu$m is driven through the micro-pore membrane, the pores of which having a size in the range of from 0.2 to 10 $\mu$m and the ratio of the diameter of the emulsified droplets and the size of the pores of the micro-pore membrane being in the range of from 0.5 to 10.

2. A process as claimed in claim 1, characterized in that the membrane having an array of hydrophilic zones interspersed amongst an array of oleophilic zones has been prepared by treating a membrane with a weak oil-in-water emulsion in order to provide the respective hydrophilic and oleophilic zones.

3. A process as claimed in claim 1 or 2, characterized in that the water-oil emulsion to be broken is a Li membrane.

4. Plant for carrying out a process as claimed in any one of the preceding claims, which comprises a vessel which is arranged to present a micro-pore membrane to the flow of a water-oil emulsion, which membrane has an array of hydrophilic zones interspersed amongst an array of oleophilic zones and a vessel in which the resulting two separated phases can settle apart, characterized in that the pores of the micro-pore membrane have a size in the range of from 0.2 to 10 $\mu$m.

**Revendications**

1. Un procédé pour la rupture d'une émulsion stable eau-huile, l'émulsion étant conduite, dans ce procédé, à travers une membrane à micro-pores possédant un arrangement de zones hydrophiliques entremêlé avec un arrangement de zones oléophiliques, caractérisé en ce que, afin d'obtenir une séparation complète entre l'eau et l'huile, une émulsion stable eau-huile dans laquelle les gouttelettes émulsifiées ont un diamètre compris entre 0,4 et 7 $\mu$m est conduite à travers la membrane à micro-pores, les pores de celle-ci ayant une taille comprise entre 0,2 et 10 $\mu$m et le rapport du diamètre des gouttelettes émulsifiées et de la taille des pores de la membrane à micro-pores étant compris entre 0,5 et 10.

2. Un procédé selon la revendication 1, caractérisé en ce que la membrane possédant un arrangement de zones hydrophiliques entremêlé avec un arrangement de zones oléophiliques a été préparée en traitant une membrane avec une émulsion huile-dans-eau faible afin de fournir les zones respectives hydrophiliques et oléophiliques.

3. Un procédé selon les revendications 1 ou 2, caractérisé en ce que l'émulsion eau-huile à casser est une membrane Li.

4. Une installation pour réaliser un procédé selon n'importe laquelle des revendications précédentes, qui comprend un récipient qui est disposé de façon à présenter une membrane à micro-pores au flux d'une émulsion eau-huile, cette membrane possédant un arrangement de zones hydrophiliques entremêlé avec un arrangement de zones oléophiliques et un récipient dans lequel les deux phases séparées résultantes peuvent déposer, caractérisée en ce que les pores de la membrane à micro-pores ont une taille comprise entre 0,2 et 10 $\mu$m.

**Patentansprüche**

1. Ein Verfahren zum Aufbrechen einer stabilen Wasser-Öl-Emulsion, in welchem Ver-fahren eine Emulsion durch eine mikroporige Membran mit einer zwischen einer Anordnung von oleophilen Zonen eingesprenkelten Anordnung von hydrophilen Zonen hindurchgezwungen wird, dadurch gekennzeichnet, daß, um eine vollständige Trennung zwischen Wasser und Öl zu be-wirken, eine stabile Wasser-Öl-Emulsion, in wel-cher die emulgierten Tröpfchen einen Durchmesser im Bereich von 0,4 bis 7 $\mu$m aufweisen, durch die mikroporige Membran, deren Poren eine Größe im Bereich von 0,2 bis 10 $\mu$m auf-weisen, hindurchgezwungen wird, und daß das Verhältnis des Durchmessers der emulgierten Tröpfchen zur Größe der Poren der mikroporigen Membran im Bereich von 0,5 bis 10 liegt.

2. Ein Verfahren wie in Anspruch 1 beansprucht, dadurch gekennzeichnet, daß die mikroporige Membran mit einer zwischen einer Anordnung von oleophilen Zonen eingesprenkelten Anordnung von hydrophilen Zonen hergestellt worden ist durch Behandeln einer Membran mit einer schwachen Öl-in-Wasser-Emulsion, um die betreffenden hydrophilen und oleophilen Zonen auszubilden.

3. Ein Verfahren wie in Anspruch 1 oder 2 beansprucht, dadurch gekennzeichnet, daß die aufzubrechende Wasser-Öl-Emulsion eine Li-Membran ist.

4. Anlage zur Durchführung eines Verfahrens wie in irgendeinem der vorhergehenden Ansprüche beansprucht, welche einen Kessel, der so angeordnet ist, daß er dem Strom einer Wasser-Öl-Emulsion eine mikroporige Membran darbietet, welche Membran eine zwischen einer Anordnung von oleophilen Zonen eingesprenkelte Anordnung von hydrophilen Zonen aufweist, und einen Kessel, in welcher die sich bildenden beiden getrennten Phasen gesondert für sich absitzen können, umfaßt, dadurch gekennzeichnet, daß die Poren der mikroporigen Membran eine Größe im Bereich von 0,2 bis 10 $\mu$m haben.

0 017 283